# EUROPÄISCHE PATENTSCHRIFT

(11) **EP 1 069 034 B1**
(45) Veröffentlichungstag und Bekanntmachung des Hinweises auf die Patenterteilung: **16.03.2005**
(21) Anmeldenummer: 00112126.8
(22) Anmeldetag: 06.06.2000
(51) Int. Cl.: B62J 7/04, B62K 25/28

(54) **Gepäckträger für vollgefederte Fahrräder**
Carrier for bicycle with suspension
Porte-bagages pour bicyclette à suspension

(30) Priorität: 16.07.1999 DE 19933324
(43) Veröffentlichungstag der Anmeldung: 17.01.2001
(73) Patentinhaber: Bayerische Motoren Werke Aktiengesellschaft, 80809 München (DE)
(72) Erfinder: Walter, Alexander, 80796 München (DE)

(56) Entgegenhaltungen:
- DE-U- 29 900 862
- FR-A- 731 473
- GB-A- 201 618

## Beschreibung

Die Erfindung betrifft ein vollgefedertes Fahrrad mit einem Rahmen, einer mit dem Rahmen gelenkig verbundenen Schwinge, in der das Hinterrad drehbar gelagert ist und an der eine auf das Hinterrad einwirkende Bremseinrichtung befestigt ist, und einem sich am Rahmen und an der Schwinge abstützenden Feder-Dämpferelement und einem Gepäckträger.

Bisher gibt es zwei Arten von Gepäckträgern für vollgefederte Fahrräder:
- Gepäckträger, die mit dem Rahmen starr verbunden sind, und
- Gepäckträger, die mit der Schwinge starr verbunden sind. Bei beiden bekannten Arten von Gepäckträgern wird das Fahrverhalten und der Fahrkomfort stark beeinträchtigt, wenn größere Lasten, wie z. B. ein Kind im Kindersitz befördert werden. Bei Gepäckträgern der ersten Bauart wirkt die Last durch den großen Hebelarm überproportional stark auf die Federung. Dies macht eine straffe Grundauslegung der Federung erforderlich, so daß der Fahrkomfort bei normaler Last ungenügend ist. Außerdem macht der flache Stützwinkel des Gepäckträgers eine sehr solide Ausführung erforderlich. Dies wirkt sich nicht nur auf die Herstellungskosten, sondern auch auf das Gewicht nachteilhaft aus. Bei Gepäckträgern der zweiten Bauart zählt die Last zu den ungefederten Massen und verschlechtert daher den Fahrkomfort des Fahrers.

Der Erfindung liegt die Aufgabe zugrunde, ein vollgefedertes Fahrrad zu schaffen, das bei geringem Gewicht einen guten Fahrkomfort ermöglicht.

Erfindungsgemäß wird diese Aufgabe durch die Merkmale des Anspruchs 1 gelöst.

Die Koppelstrebe ermöglicht nicht nur eine stabile Abstützung des Gepäckträgers bei kleinem Querschnitt und demzufolge geringem Gewicht, sondern auch einen hohen Fahrkomfort für den Fahrer und gegebenenfalls für ein Kind im Kindersitz, weil die Last auf gefederte und ungefederte Massen aufgeteilt ist. Es ist eine weiche Grundauslegung des Feder-Dämpferelements möglich, weil die Durchschlagsneigung gering ist. Auch bei großer Belastung ist ein guter Fahrbahnkontakt gewährleistet, wodurch die Fahrsicherheit erhöht wird.

Bei einer in konstruktiver Hinsicht besonders vorteilhaften Ausführungsform der Erfindung ist vorgesehen, daß der Gepäckträger mit einem an der Sattelstützenklemme befestigten Gelenk verbindbar ist. Eine weitere Möglichkeit besteht darin, daß der Gepäckträger mit einem am Rahmen-Sattelrohr befestigten Gelenk verbindbar ist.

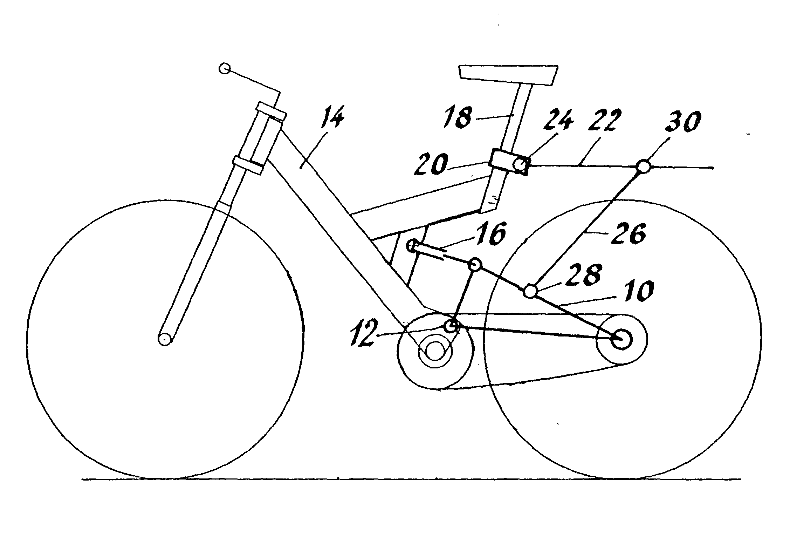

Die Erfindung wird nachfolgend anhand der Zeichnung näher erläutert.

In der einzigen Figur der Zeichnung ist ein vollgefedertes Fahrrad in der Seitenansicht schematisch dargestellt.

Bei dem dargestellten vollgefederten Fahrrad, das insbesondere zum Einsatz im Gelände bestimmt ist, ist das Hinterrad in einer Schwinge 10 drehbar gelagert. Die als Dreieckschwinge ausgebildete Schwinge 10 ist in der Nähe des Tretlagers mit einem Gelenk 12 im Rahmen 14 drehbar gelagert. Das Gelenk könnte aber auch konzentrisch zum Tretlager angeordnet sein. Ein Feder-Dämpferelement 16 stützt sich im Abstand von dem Gelenk 12 an der Schwinge 10 und an dem Rahmen 14 gelenkig ab. An der Schwinge 10 ist eine (nicht gezeigte) Bremseinrichtung für das Hinterrad befestigt, die als Felgen- oder als Scheibenbremse ausgebildet sein kann. Eine derartige Aufhängung des Hinterrades, die auch als Eingelenkradführung bezeichnet wird, ist an sich bekannt und bedarf daher keiner weiteren Erläuterung.

Eine Sattelstütze 18 ist mit einer Sattelstützenklemme 20 am Rahmen 14 befestigt. Die gezeigte Sattelstützenklemme 20 unterscheidet sich von einer herkömmlichen Sattelstützenklemme durch ein Gelenk 24 zur Abstützung eines Gepäckträgers 22. Der Gepäckträger 22 ist an seinem vorderen Ende durch das Gelenk 24 mit der Sattelstützenklemme 20 verbunden. Eine Koppelstrebe 26 ist an beiden Enden durch Gelenke 28 und 30 mit der Schwinge 10 bzw. mit dem Gepäckträger 22 verbunden. Die Schwinge 10, der Gepäckträger 22 und die Koppelstrebe 26 sind zur Längsachse des Fahrrads symmetrisch ausgebildet, und die Drehachsen der Gelenke 12, 24, 28 und 30 sind horizontal.

Mit dieser Abstützung des Gepäckträgers 22 wird eine aufgebrachte Last zum Teil über die Sattelstützenklemme 20 in den gefederten Rahmen 14 eingeleitet und zum Teil über die Koppelstrebe 26 in die ungefederte Schwinge 10 eingeleitet. Wie gezeigt, ist das untere Gelenk 28 der Koppelstrebe 26 im Bereich der vorderen Hälfte der Schwinge 10 angeordnet, wogegen das obere Gelenk 30 im Bereich der hinteren Hälfte des Gepäckträgers 22 angeordnet ist. Durch diese Maßnahme wird erreicht, daß sich der Gepäckträger 22 beim Einfedern der Schwinge 10 nur um einen Bruchteil der Auslenkung der Schwinge bewegt. Der Ort des unteren und des oberen Gelenks 28 und 30 und damit das Verhältnis der Hebelarme wird zweckmäßiger Weise so gewählt, daß die Auslenkung des Gepäckträgers 22 beim Einfedern bzw. beim Ausfedern nur 1/3 bis 1/2 der Auslenkung der Schwinge 10 beträgt.

Abweichend von dem gezeigten Ausführungsbeispiel könnte der Gepäckträger auch an einem Gelenk drehbar gelagert sein, welches nicht an der Sattelstützenklemme, sondern am Sattelrohr des Rahmens befestigt ist. Ferner kann die kombinierte Abstützung des Gepäckträgers am gefederten Rahmen und an der ungefederten Schwinge auch bei einem Fahrrad mit Viergelenkradführung verwirklicht werden. In diesem Fall wäre die Schwinge nicht unmittelbar mit dem Rahmen gelenkig verbunden, sondern mit einem oberen und einem unteren Lenker gelenkig verbunden, die ihrerseits im Rahmen drehbar gelagert sind.

### Bezugszeichenliste:

- 10: Schwinge
- 12: Gelenk von 10
- 14: Rahmen
- 16: Feder-Dämpferelement
- 18: Sattelstütze
- 20: Sattelstützenklemme
- 22: Gepäckträger
- 24: Gelenk von 22
- 26: Koppelstrebe
- 28: unteres Gelenk von 26
- 30: oberes Gelenk von 26

## Patentansprüche

1. Vollgefedertes Fahrrad mit einem Rahmen (14), einer mit dem Rahmen gelenkig verbundenen Schwinge (10), in der das Hinterrad drehbar gelagert ist und an der eine auf das Hinterrad einwirkende Bremseinrichtung befestigt ist, einem sich am Rahmen (14) und an der Schwinge (10) abstützenden Feder-Dämpferelement (16) und einem Gepäckträger (22), **dadurch gekennzeichnet, dass** der Gepäckträger (22) an seinem vorderen Ende mit dem Rahmen (14) gelenkig verbunden ist, und dass eine Koppelstrebe (26) mit dem Gepäckträger (22) im Abstand von dessen Drehpunkt (24) gelenkig verbunden ist und mit der Schwinge (10) im Abstand von deren Drehpunkt (12) gelenkig verbunden ist, wobei die beiden Anlenkpunkte (28, 30) der Koppelstrebe (26) im Bereich der vorderen Hälfte der Schwinge (10) und im Bereich der hinteren Hälfte des Gepäckträgers (22) liegen.

2. Vollgefedertes Fahrrad nach Anspruch 1, **dadurch gekennzeichnet, dass** der Gepäckträger (22) mit einem an der Sattelstützenklemme (20) befestigten Gelenk (24) verbindbar ist.

3. Vollgefedertes Fahrrad nach Anspruch 1, **dadurch gekennzeichnet, dass** der Gepäckträger mit einem am Rahmen-Sattelrohr befestigten Gelenk verbindbar ist.

## Claims

1. A fully-sprung bicycle comprising a frame (14), a rocker arm (10) pivotably connected to the frame and in which the rear wheel is rotatably mounted and to which a brake device acting on the rear wheel is fastened, a spring shock-absorbing element (16) abutting the frame (14) and the rocker arm (10), and a luggage rack (22), **characterised in that** the front end of the luggage rack (22) is pivotably connected to the frame (14) and a coupling strut (26) is pivotably connected to the luggage rack (22) at a distance from its centre of rotation (24) and pivotably connected to the rocker arm (10) at a distance from its centre of rotation (12), wherein the two places (28, 30) where the coupling strut (26) is pivoted lie in the neighbourhood of the front half of the rocker arm (10) and in the neighbourhood of the rear half of the luggage rack (22).

2. A fully-sprung bicycle according to claim 1, **characterised in that** the luggage carrier (22) is connectable to a link (24) fastened to the seat filler clamp (20).

3. A fully-sprung bicycle according to claim 1, **characterised in that** the luggage rack is connectable to a link fastened to the seat tube on the frame.

## Revendications

1. Bicyclette à suspension comprenant un cadre (14), une bielle (10) reliée de façon articulée au cadre, dans laquelle la roue arrière est logée en rotation et à laquelle est fixé un dispositif de freinage agissant sur la roue arrière, un élément d'amortissement à ressort (16) s'appuyant contre le cadre (14) et la bielle (10), et un porte-bagages (22),
**caractérisée en ce que**
le porte-bagages (22), à son extrémité avant, est relié de façon articulée au cadre (14), et une barre de couplage (26) est reliée de façon articulée au porte-bagages (22) à distance de son point de rotation (24) et de façon articulée à la bielle (10) à distance de son point de rotation (12), les deux points d'articulation (28, 30) de la barre de couplage (26) se situant dans la zone de la moitié avant de la bielle (10) et dans la zone de la moitié arrière du porte-bagages (22).

2. Bicyclette à suspension selon la revendication 1,
**caractérisée en ce que**
le porte-bagages (22) peut être relié à une articulation (24) fixée au collier de selle (20).

3. Bicyclette à suspension selon la revendication 1,
**caractérisée en ce que**
le porte-bagages peut être relié à une articulation fixée au tube de selle du cadre.
